# FASCICULE DE BREVET EUROPEEN

(11) **EP 1 173 342 B1**
(45) Date de publication et mention de la délivrance du brevet: **15.08.2007**
(21) Numéro de dépôt: 01907755.1
(22) Date de dépôt: 09.02.2001
(51) Int. Cl.: B60J 7/14

(54) **TOIT ESCAMOTABLE DANS LE COFFRE ARRIERE D'UN VEHICULE, CE TOIT COMPORTANT UNE LUNETTE ARRIERE PIVOTANTE**
IM KOFFERRAUM EINES KRAFTFAHRZEUGES VERSENKBARES DACH, DIESES DACH IST MIT EINER SCHWENKBAREN HECKSCHEIBE AUSGERÜSTET
ROOF CAPABLE OF BEING RETRACTED INTO A MOTOR VEHICLE REAR DECK COMPRISING A PIVOTING REAR WINDOW

(30) Priorité: 21.02.2000 FR 0002130; 20.03.2000 FR 0003542
(43) Date de publication de la demande: 23.01.2002
(73) Titulaire: Société Européenne de Brevets Automobiles, 75011 Paris (FR)
(72) Inventeur: QUEVEAU, Gérard, F-79140 le Pin (FR); QUEVEAU, Paul, F-79140 Montravers (FR); GUILLEZ, Jean-Marc, F-79140 Cirières (FR)
(74) Mandataire: Geismar, Thierry
(86) Numéro de dépôt international: PCT/FR2001/000389
(87) Numéro de publication internationale: WO 2001/062533

(56) Documents cités:
- EP-A- 0 678 411
- EP-A- 0 956 990
- GB-A- 2 334 490

## Description

La présente invention concerne un toit escamotable dans le coffre arrière d'un véhicule.

Un tel toit escamotable permet de transformer un véhicule automobile du type coupé en un véhicule du type cabriolet.

On connaît notamment par des brevets au nom de la demanderesse, des toits escamotables dans le coffre arrière d'un véhicule.

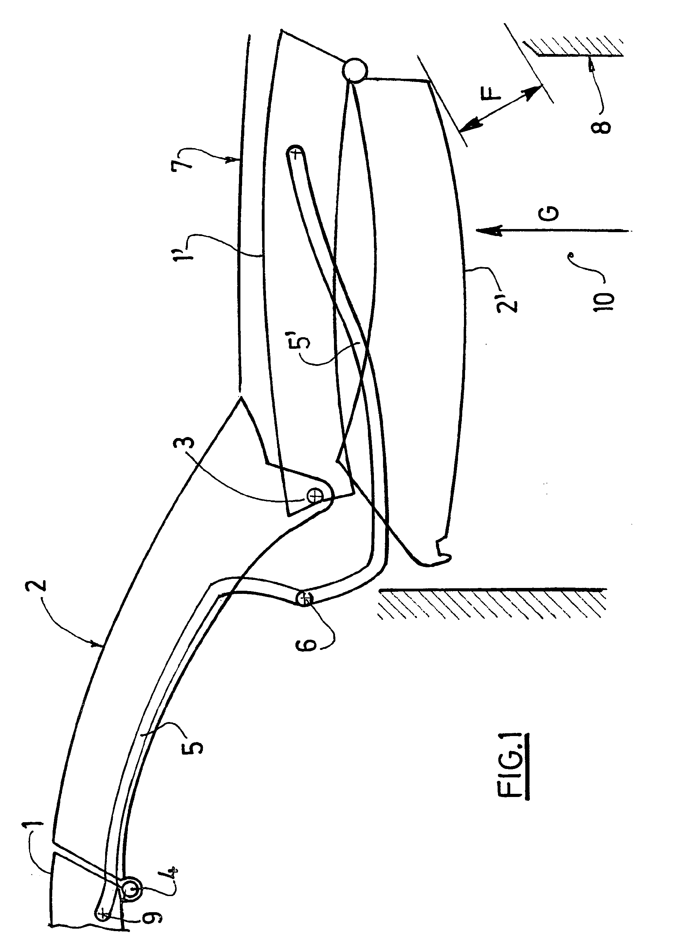

La figure 1 annexée illustre un toit escamotable du type ci-dessus.

Ce toit escamotable comprend un élément avant rigide 1 relié de façon articulée en 4 à un élément arrière rigide 2 dont l'extrémité arrière est articulée en 3 au châssis du véhicule. Ces deux éléments 1, 2 sont mobiles entre une position dans laquelle ces deux éléments 1, 2 recouvrent l'habitacle du véhicule et une position dans laquelle ces éléments (voir 1' et 2') sont repliés à l'intérieur du coffre arrière 10 dans une position sensiblement parallèle au couvercle 7 du coffre.

Le déplacement entre les deux positions ci-dessus, des éléments 1. 2 est commandé au moyen d'un bras 5 articulé au châssis en 6 et à l'élément avant en 9. Le pivotement du bras 5 est commandé par exemple par un moteur relié à l'axe 3. Les articulations 4, 9, 6, 3 forment un parallélogramme déformable.

L'élément arrière 2 porte une lunette arrière qui est habituellement fixée dans le prolongement de la surface extérieure de l'élément arrière.

La figure 1 montre que dans la position de rangement des éléments 1, 2, il subsiste à l'intérieur du coffre 10, une distance réduite F entre le seuil arrière 8 de chargement du coffre et le bord inférieur de l'élément 2' et une hauteur réduite G entre ce dernier et le fond du coffre.

Le document GB 2 334 490 décrit un toit escamotable dans le coffre arrière du véhicule comprenant un élément avant rigide, un élément central arrière et deux éléments latéraux reliés à l'élément central. Toutefois, ce document ne décrit pas un élément avant rigide relié de façon articulée à l'élément central arrière.

Le but de la présente invention est d'augmenter les distances et hauteur ci-dessus afin de faciliter l'accès des bagages et d'augmenter le volume disponible à l'intérieur du coffre lorsque les éléments du toit sont rangés à l'intérieur de ce dernier.

L'invention vise ainsi un toit escamotable dans le coffre arrière d'un véhicule, comportant un élément rigide relié de façon articulée à un élément central arrière rigide suivant un premier axe situé le plus près possible du volume extérieur du toit, l'extrémité arrière dudit élément central arrière étant articulée au châssis du véhicule suivant un deuxième axe qui est horizontal et perpendiculaire à l'axe longitudinal du véhicule, ces deux éléments étant mobiles entre une position dans laquelle ces deux éléments recouvrent l'habitacle du véhicule et une position dans laquelle ces deux éléments sont repliés l'un sur l'autre à l'intérieur du coffre arrière dans une position sensiblement parallèle au couvercle dudit coffre.

Suivant l'invention, la partie arrière du toit comprend en plus de l'élément central arrière deux éléments latéraux qui sont reliés à l'élément central arrière par des moyens tels que lors du déplacement de l'élément central vers le coffre arrière, les éléments latéraux puissent se dégager de la surface extérieure de l'élément central.

Grâce à cette disposition, on augmente la distance entre le seuil de chargement et l'élément arrière, ainsi que la distance entre celui-ci et le fond du coffre.

Selon l'invention, les éléments arrières sont articulés au châssis suivant un axe horizontal perpendiculaire à l'axe longitudinal du véhicule. De préférence, cet axe horizontal passe par le bord inférieur arrière dudit élément arrière.

Selon une version de l'invention lorsque les quatre éléments du toit sont repliés à l'intérieur du coffre, les deux éléments latéraux arrière s'étendent sous l'élément avant sensiblement parallèlement au fond du coffre et l'élément central arrière s'étend au-dessus du bord inférieur des deux éléments latéraux arrière.

On augmente ainsi notablement la facilité d'accès au coffre arrière ainsi que le volume de chargement de celui-ci.

D'autres particularités et avantages de l'invention apparaîtront encore dans la description ci-après.

Aux dessins annexés donnés à titre d'exemples non limitatifs :
- la figure 2 est une vue en coupe schématique longitudinale d'un toit escamotable conforme à l'invention ;
- la figure 3 est une vue en coupe suivant A de la figure 2 ;
- la figure 4 est une vue en coupe suivant B de la figure 2 ;
- la figure 5 est une vue en coupe suivant C de la figure 2 ;
- la figure 6 est une vue en coupe suivant D de la figure 2 ;
- la figure 7 est une vue en coupe longitudinale schématique, montrant les éléments du toit escamotable rangés dans le coffre, selon une version avantageuse de l'invention.

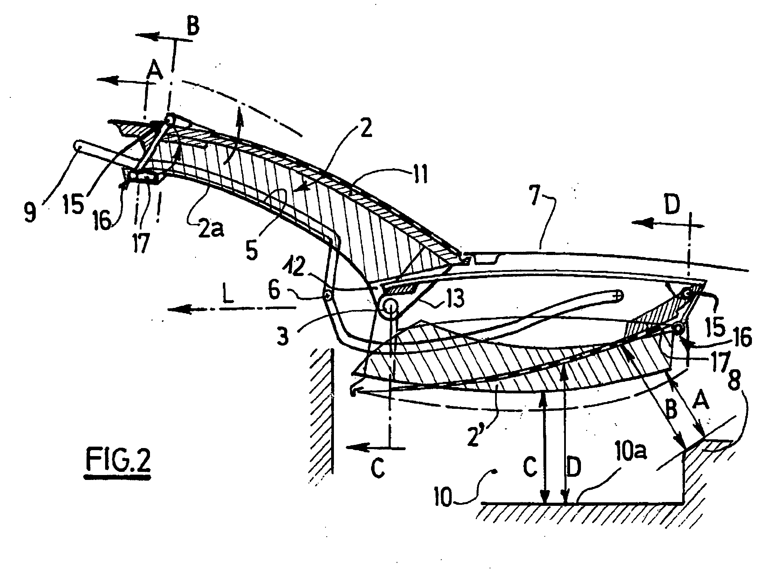

Dans la réalisation de la figure 2, le toit escamotable comporte un élément central arrière 11 qui est articulé dans sa partie avant au toit avant 1 par un axe 15 situé le plus proche possible du volume extérieur du toit.

Comme le montre la figure 2, chaque élément latéral arrière 2 est relié à l'élément central 11 par des moyens tels que lors du déplacement de cet élément 11 vers le coffre 10 les deux éléments latéraux arrière 2 puissent se dégager de la surface intérieure de l'élément avant 1 comme montré par la position 2' de ces éléments latéraux 2.

Comme le montre également la figure 2 les deux éléments latéraux 2 et l'élément central arrière 11 sont articulés au châssis suivant le même axe horizontal 3 perpendiculaire à l'axe longitudinal L du véhicule.

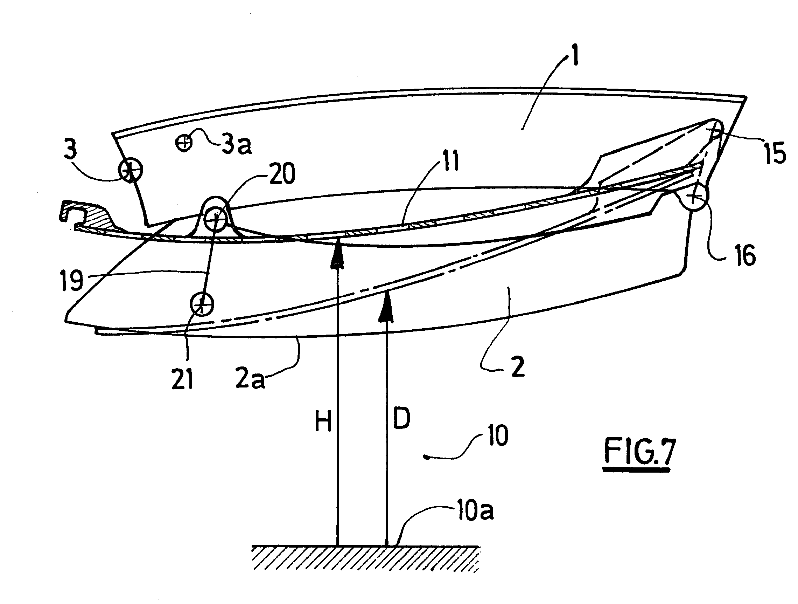

Dans l'exemple de la figure 2, le bord arrière de la lunette arrière 11 porte à chacune de ses extrémités une patte fixe 13 dont l'extrémité est montée pivotante sur l'axe horizontal 3 (voir également la figure 5).

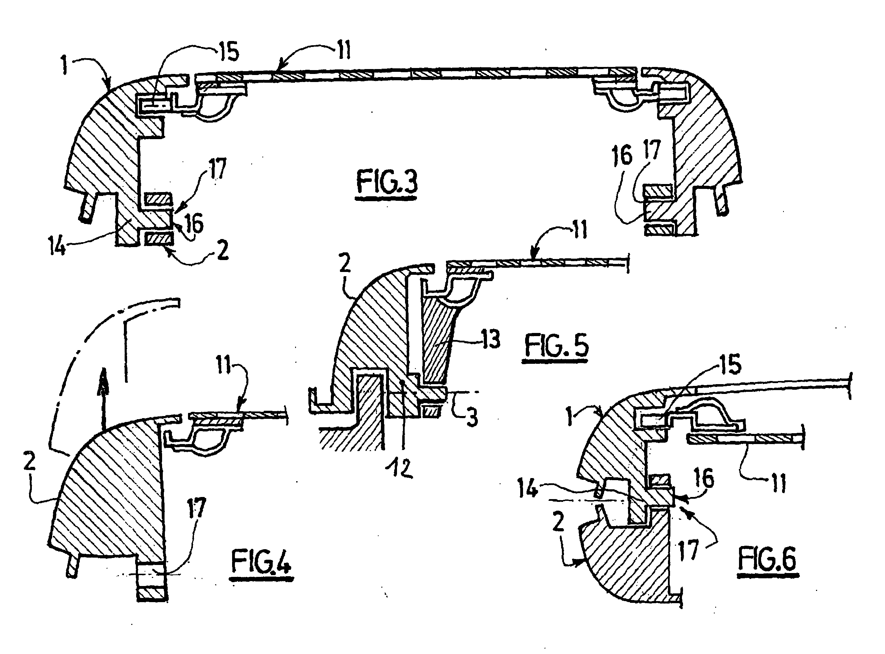

Comme montré par les figures 3 et 4, le bord arrière de l'élément avant 1 porte à chacune de ses extrémités une extension 14 dont l'extrémité opposée à l'articulation 15 de l'élément central porte un doigt 16 qui est engagé dans une lumière 17 de l'élément latéral arrière 2. Cette lumière 17 est allongée sensiblement dans la direction du bord inférieur 2a de l'élément latéral 2.

La poussée du doigt 16 dans la lumière 17 lors du pivotement du toit avant 1 autour de l'axe 15 de l'élément central arrière 11 permet le pivotement de l'élément latéral arrière 2 autour de l'axe 3 et donc son dégagement par rapport à l'élément central 11.

Dans le cas de la version représentée sur la figure 7, on a optimisé davantage la hauteur disponible D au-dessus du fond 10a du coffre, pour obtenir une hauteur H. Dans cette version, on a modifié la position de l'articulation 3 pour la déplacer en 3a et on a solidarisé l'élément central 11 et les éléments latéraux 2 par une biellette 19.

Dans cet exemple, l'articulation commune entre les éléments latéraux 2 et l'élément central 11 est remplacée par un axe 20 solidaire de l'élément central 11 sur lequel s'articule la biellette 19 articulée à son autre extrémité sur l'élément arrière latéral 2 en 21.

Le mouvement de rotation de l'élément central 11 en 3a et du toit avant 1 entraîne le déplacement des éléments latéraux 2 sensiblement parallèlement à eux-mêmes relativement à l'élément central 11.

On va maintenant expliquer en référence à la figure 2, le fonctionnement de la première version du toit escamotable selon l'invention.

Le pivotement du bras 5 vers l'arrière, autour de l'axe 6, fait tourner la partie centrale arrière 11 autour de l'axe 3, autour duquel tournent également les éléments latéraux 2.

Lors du pivotement de l'élément central arrière 11 vers le coffre arrière 10, l'avant des éléments latéraux 2 se dégage progressivement à l'extérieur de l'élément central 11, ce mouvement étant provoqué par la poussée du doigt 16 du toit 1 dans la lumière 17 des éléments latéraux 2.

Ainsi lorsque les deux éléments de toit 1 et 11 sont situés dans le coffre 10, l'avant de l'élément central 11 est situé à une distance B du seuil 8 de chargement du coffre, plus importante que la distance A qui sépare l'avant des éléments latéraux 2 au seuil 8.

Cette position optimisée de l'élément central 11 est due à la position de l'axe 15 très proche du volume extérieur de toit.

Cette position de l'élément central 11 fait également passer de C à D la hauteur de chargement du coffre.

Dans le cas de la version illustrée par la figure 7, grâce aux doigt 16 du toit avant 1 et à la biellette 19 qui relie de façon articulée les deux éléments latéraux 2 à l'élément central 11, l'augmentation de la hauteur de chargement du coffre est encore augmentée puisque celle-ci passe de D à H.

Bien entendu, l'invention n'est pas limitée aux exemples de réalisations que l'on vient de décrire et on peut apporter à ceux-ci des modifications pour autant que celles-ci ne sortent pas de l'étendue de protection définie par les revendications.

## Revendications

1. Toit escamotable dans le coffre arrière (10) d'un véhicule, comportant un élément avant rigide (1) relié de façon articulée à un élément central arrière rigide (11) suivant un premier axe (15) situé le plus près possible du volume extérieur du toit, l'extrémité arrière dudit élément central arrière (11) étant articulée au châssis du véhicule suivant un deuxième axe (3, 3a) qui est horizontal et perpendiculaire à l'axe longitudinal (L) du véhicule, l'élément de toit avant (1) et l'élément central arrière rigide (11) étant mobiles entre une position dans laquelle ces deux éléments recouvrent l'habitacle du véhicule et une position dans laquelle l'élément de toit avant (1) et l'élément central arrière rigide (11) sont repliés l'un sur l'autre à l'intérieur du coffre arrière (10) dans une position sensiblement parallèle au couvercle (7) dudit coffre (10) ledit toit étant **caractérisé en ce que** la partie arrière du toit comprend en plus de l'élément central arrière (11) deux éléments latéraux (2), lesdits éléments latéraux (2) étant reliés à l'élément central arrière (11) par des moyens tels que lors du déplacement de l'élément central (11) vers le coffre arrière (10), les éléments latéraux puissent se dégager de la surface extérieure de l'élément central (11).

2. Toit escamotable selon la revendication 1, **caractérisé en ce que** chacun des éléments latéraux (2) porte à son extrémité inférieure une patte fixe (12) dont l'extrémité est montée pivotante sur l'élément central arrière (11) selon ledit deuxième axe (3).

3. Toit escamotable selon la revendication 1, **caractérisé en ce que** le bord arrière de l'élément avant (1) porte à chacune de ses extrémités un doigt (16) formant levier par rapport au premier axe (15) lors de la rotation de l'élément avant (1) avec l'élément central arrière (11).

4. Toit escamotable selon la revendication 3, **caractérisé en ce que** chaque doigt (16) est engagé dans une lumière (17) de l'élément latéral (2) correspondant, ladite lumière (17) étant allongée sensiblement dans la direction du bord inférieur (2a) de l'élément latéral (2) et ledit doigt (16) poussant la partie supérieure 1 de l'élément latéral (2) pour faire pivoter ledit élément latéral (2) autour dudit deuxième axe (3).

## Claims

1. - A roof retractable into the rear trunk (10) of a vehicle, including a rigid front element (1) hingedly connected to a rigid rear central element (11) along a first axis (15) located as close to the roof external volume as possible, the rear end of said rear central element (11) being hingedly connected to the vehicle body along a second axis (3, 3a) which is horizontal and perpendicular to the longitudinal axis (L) of the vehicle, the front roof element (1) and the rear central element (11) being movable between a position where such two elements cover the vehicle passenger compartment and a position where the front roof element (1) and the rear central element (11) are folded one on top of the other inside the rear trunk (10), in a position substantially parallel to the lid (7) of said trunk (10), said roof being **characterised in that** the rear portion of the roof comprises, in addition to the rear central element (11), two side elements (2), said side elements (2) being connected to the rear central element (11) by means such that the side elements can disengage from the external surface of the central element (11) upon the movement of the central element (11) toward the rear trunk (10).

2. - A retractable roof according to Claim 1, **characterised in that** each side element (2) has at its lower end a fixed lug (12) whose tip is rotatively mounted on the rear central element (11) along said second axis (3).

3. - A retractable roof according to Claim 1, **characterised in that** the rear edge of the front element (1) has at each of its ends a finger (16) which acts as a lever on the first axis (156) upon the rotation of the front element (A) with the rear central element (11).

4. - A retractable roof according to Claim 3, **characterised in that** each finger (16) is engaged in a lumen (17) of the corresponding side element (2), said lumen (17) extending substantially towards the lower edge (2a) of the side element (2) and said finger (16) pushing the upper portion of the side element (2) to pivot said side element (2) around said second axis (3).

## Patentansprüche

1. Ein in den hinteren Kofferraum (10) eines Fahrzeugs versenkbares Dach, das ein steifes vorderes Teil (1) umfaßt, das gelenkig mit einem steifen mittleren hinteren Dachelement (11) nach einer ersten Achse (15) verbunden ist, die sich so nahe wie möglich am äußeren Volumen des Daches befindet, wobei das hintere Ende des besagten mittleren hinteren Dachelements (11) nach einer zweiten Achse (3, 3a) gelenkig mit dem Rahmen des Fahrzeugs verbunden ist, die horizontal und senkrecht zur Längsachse (L) des Fahrzeugs verläuft, wobei das vordere Dachelement (1) und das steife mittlere hintere Dachelement (11) zwischen einer Position beweglich sind, in der diese beiden Elemente die Fahrerkabine des Fahrzeugs abdecken, und einer Position, in der das vordere Dachelement (1) und das steife mittlere hintere Dachelement (11) übereinander im hinteren Kofferraum (10) in einer deutlich parallel zum Deckel (7) des besagten Kofferraums (10) liegenden Position versenkt sind, wobei das besagte Dach **dadurch gekennzeichnet ist, daß** der hintere Teil des Daches außer dem mittleren hinteren Element (11) zwei seitliche Elemente (2) umfaßt, wobei die besagten seitlichen Elemente (2) mit dem mittleren hinteren Dachelement (11) mit solchen Mitteln verbunden sind, daß sich die seitlichen Elemente bei der Verschiebung des mittleren Elements (11) zum hinteren Kofferraum (10) hin von der Außenfläche des mittleren Elements (11) lösen können.

2. Ein versenkbares Dach nach Anspruch 1, **dadurch gekennzeichnet, daß** jedes der seitlichen Elemente (2) an seinem unteren Ende eine feste Halterung (12) trägt, deren Ende nach der besagten zweiten Achse (3) schwenkend auf dem mittleren hinteren Element (11) montiert ist.

3. Ein versenkbares Dach nach Anspruch 1, **dadurch gekennzeichnet, daß** die hintere Kante des vorderen Elements (1) an jedem ihrer Enden einen Zapfen (16) trägt, der bei der Drehung des vorderen Elements (1) mit dem mittleren hinteren Element (11) einen Hebel im Verhältnis zur ersten Achse (15) bildet.

4. Ein versenkbares Dach nach Anspruch 3, **dadurch gekennzeichnet, daß** jeder Zapfen (16) in eine Öffnung (17) des entsprechenden seitlichen Elements (2) eingreift, wobei die besagte Öffnung (17) in Richtung der unteren Kante (2a) des seitlichen Elements (2) deutlich verlängert ist und der besagte Zapfen (16) den oberen Teil des seitlichen Elements (2) schiebt, damit das besagte seitliche Element (2) um die besagte zweite Achse (3) schwenkt.
